# EUROPÄISCHE PATENTSCHRIFT

(11) **EP 0 740 740 B1**
(45) Veröffentlichungstag und Bekanntmachung des Hinweises auf die Patenterteilung: **14.04.1999**
(21) Anmeldenummer: 95902756.6
(22) Anmeldetag: 09.12.1994
(51) Int. Cl.: F02D 9/10, B29C 45/14, F16K 1/22

(54) **DROSSELVORRICHTUNG, INSBESONDERE FÜR EINE BRENNKRAFTMASCHINE, UND VERFAHREN ZUM HERSTELLEN EINER DROSSELVORRICHTUNG**
THROTTLE, IN PARTICULAR FOR INTERNAL COMBUSTION ENGINES, AND PROCESS FOR PRODUCING SUCH THROTTLES
DISPOSITIF D'ETRANGLEMENT, NOTAMMENT POUR MOTEURS A COMBUSTION INTERNE, ET SON PROCEDE DE FABRICATION

(30) Priorität: 17.12.1993 DE 4343091
(43) Veröffentlichungstag der Anmeldung: 06.11.1996
(73) Patentinhaber: ROBERT BOSCH GMBH, 70442 Stuttgart (DE)
(72) Erfinder: GMELIN, Karl, D-74223 Flein (DE); SCHMIDT, Christof, D-71636 Ludwigsburg (DE)
(86) Internationale Anmeldenummer: DE9401478
(87) Internationale Veröffentlichungsnummer: WO9516854

(56) Entgegenhaltungen:
- EP-A- 0 482 272
- EP-A- 0 498 933
- FR-A- 2 687 601
- US-A- 1 588 445
- US-A- 2 059 687
- US-A- 3 670 071
- FEINWERKTECHNIK & MESSTECHNIK, Bd.87, Nr.6, 1. September 1979, MUNCHEN Seiten 253 - 259 HAACK 'Outsert-Technik, Verfahren zur wirtschaftlichen Herstellung feinwerktechnischer Bauteile'
- PATENT ABSTRACTS OF JAPAN vol. 12, no. 91 (M-679) 24. März 1988 & JP,A,62 228 652 (KEIHIN SEIKI MFG) 7. Oktober 1987
- PATENT ABSTRACTS OF JAPAN vol. 14, no. 198 (M-0965) 23. April 1990 & JP,A,02 040 033 (KEIHIN SEIKI MFG) 8. Februar 1990
- Xerox Disclosure Journal Vol. 16, Nr 5 Sept /Oct 1991 Seite 345

## Beschreibung

### Stand der Technik

Die Erfindung geht aus von einer Drosselvorrichtung für eine Brennkraftmaschine nach der Gattung des Anspruchs 1 beziehungsweise von einem Verfahren zum Herstellen einer Drosselvorrichtung nach der Gattung der Ansprüche 4 beziehungsweise 5. Es ist schon eine Drosselvorrichtung bekannt (FR-A-2 687 601), die für eine Brennkraftmaschine mit einem Drosselklappenstutzen vorgesehen ist, der einen Ansaugkanal aufweist, durch den eine im Drosselklappenstutzen gelagerte Stellwelle ragt. Die Stellwelle ist mit einem einen Ansaugkanal steuernden Drosselorgan verbunden, die als scheibenförmiges Kunststoffteil ausgebildet und durch Spritzgießen hergestellt ist. Hierzu werden beidseitig stromaufwärts und stromabwärts der Stellwelle je ein Spritzwerkzeug in den Ansaugkanal eingeführt, wobei ein Hohlraum um die Stellwelle verbleibt. Danach wird der Hohlraum mittels in den Hohlraum reichender Einfülleitungen mit Kunststoff ausgefüllt. Nach dem Erstarren des Kunststoffes werden die Spritzwerkzeuge wieder aus dem Ansaugkanal entfernt.

Das Dokument Feinwerktechnik & Meßtechnik, Vol. 87, Nr. 6, 1979, Seiten 253 bis 259, "Outsert-Technik, Verfahren zur wirtschaftlichen Herstellung feinwerktechnischer Bauteile" von Ing. Haack, dokumentiert allgemeines Fachwissen zum Herstellen von Kunststoff-Bauelementen auf einer Trägerplatte, die in der Regel aus Metall oder einem anderen geeigneten Werkstoff besteht.

Aus dem Dokument Xerox disclosure journal, Vol. 16, Nr. 5, Sept./Oct. 1991 (Stamford Conn. US), Seite 345, "Composite Shafts" von T.R. Jaskowiak, ist bekannt, beim Spritzgießen eines Kunststoffelements auf eine Hohlwelle eine Ausnehmung vorzusehen, die mit Kunststoff ausgefüllt wird.

Aus der Bosch Technischen Unterrichtung, Mono-Jetronic, 1. Ausgabe, Juni 1991, Seite 24, ist ferner ein Drosselorgan in Form einer Drosselklappe bekannt, das in einem Drosselklappenstutzen ein einströmendes Brennstoffluftgemisch mehr oder weniger steuern kann. Der Drosselklappenstutzen ist zum Beispiel Teil einer zentralen Einspritzeinheit einer Brennkraftmaschine, bei der mittels eines oberhalb der Drosselklappe angeordneten Brennstoffeinspritzventils Brennstoff intermittierend in einen Ansaugkanal des Drosselklappenstutzens eingespritzt wird. Die Drosselklappe ist in bekannter Weise in einem aus einer Stellwelle der Drosselvorrichtung ausgenommenen, länglichen Schlitz eingeführt und mittels einer Schraubverbindung mit der Stellwelle drehfest verbunden. Die Drosselklappe hat üblicherweise eine kreisrunde Form und ist als Blechstanzteil ausgebildet. Da aus Umweltschutzgründen und zur Verringerung des Brennstoffverbrauchs der Brennkraftmaschine in zunehmendem Maße sehr geringe Leerlaufdrehzahlen gefordert werden, muß beim Herstellen der Drosselklappe, des Schlitzes und einer Ansaugwandung des Ansaugkanals des Drosselklappenstutzens ein eng vorgegebener Toleranzbereich eingehalten werden, damit insbesondere bei der Leerlaufstellung der Drosselklappe durch einen äußerst geringen Spaltabstand zwischen der Drosselklappe und der Ansaugwandung nur ein sehr geringer Luftmassenstrom an der Drosselklappe vorbeiströmen kann.

Zum Einsatz der Drosselvorrichtung bei einer elektronischen Motorleistungssteuerung ist an einem aus dem Drosselklappenstutzen herausgeführten Ende der Stellwelle ein auch als Drehwinkelgeber bezeichnetes Präzisionspotentiometer angebracht, um entsprechend der Verdrehstellung der Drosselklappe einen bestimmten Widerstandswert anzunehmen, beziehungsweise ein bestimmtes Spannungssignal bereitzustellen, das einem elektronischen Steuergerät zugeführt unter anderem zur Ansteuerung eines Drosselklappenanstellmotors dient. Der Drosselklappenanstellmotor ist an einem aus dem Drosselklappenstutzen herausgeführten, zweiten Ende der Stellwelle angebracht und verdreht die Drosselklappe bei bestimmten Betriebsbereichen der Brennkraftmaschine, beispielsweise im Leerlauf oder zur Schubabschaltung oder beim sogenannten E-Gas, der elektromotorischen Verstellung der Drosselklappe. Zum Einstellen der Drosselvorrichtung wird diese in nahezu fertigmontiertem Zustand mit montierter Drosselklappe und lose angebrachtem, verdrehbarem Drehwinkelgeber in eine Meßvorrichtung eingebracht und einer Luftströmung ausgesetzt. Dabei wird durch Verdrehen der Stellwelle, beziehungsweise der Drosselklappe ein an der Drosselklappe vorbeiströmender und in der Meßvorrichtung nachgemessener Luftmassenstrom eingestellt. Daran anschießend wird der Drehwinkelgeber bei festgehaltener Stellwelle solange verdreht, bis ein bestimmtes Spannungsverhältnis am Drehwinkelgeber vorhanden ist, welches dem an der Drosselklappe vorbeiströmenden Luftmassenstrom entspricht, wonach der Drehwinkelgeber in dieser Stellung fest montiert wird. Dieser Toleranzabgleich, beziehungsweise das Einstellen der Drosselvorrichtung ist erforderlich, damit Fertigungstoleranzen der Drosselklappe und des Drehwinkelgebers ausgeglichen werden, wofür insbesondere bei einer Massenherstellung der Drosselvorrichtung ein erheblicher fertigungstechnischer und meßtechnischer Aufwand notwendig ist. Insbesondere erfordert der Einbau und das Anschrauben der Drosselklappe einen erheblichen Montageaufwand, der hohe Produktionskosten zur Folge hat.

### Vorteile der Erfindung

Die erfindungsgemäße Drosselvorrichtung mit den kennzeichnenden Merkmalen des Anspruchs 1, beziehungsweise das erfindungsgemäße Verfahren mit dem kennzeichnenden Merkmalen des Anspruchs 4 beziehungsweise 5, hat demgegenüber den Vorteil, daß in einfacher Art und Weise nahezu beliebig ausgebildete und im Drosselklappenstutzen dichtschließende oder gegenüber diesem einen exakten Radialspalt aufweisende Drosselorgane herstellbar und mit einer Stellwelle so verbindbar sind, daß eine kostengünstige Produktion möglich ist. Besonders vorteilhaft ist, daß der nach dem Stand der Technik erforderliche Toleranzabgleich des Drehwinkelgebers besonders einfach durchzuführen ist. Vorteilhafterweise kann auf eine nach dem Stand der Technik benötigte Schraubverbindung verzichtet werden.

Durch die in den Unteransprüchen aufgeführten Maßnahmen sind vorteilhafte Weiterbildungen und Verbesserungen der im Anspruch 1 angegebenen Drosselvorrichtung beziehungsweise des in den Ansprüchen 4 und 5 angegebenen Verfahrens möglich.

### Zeichnung

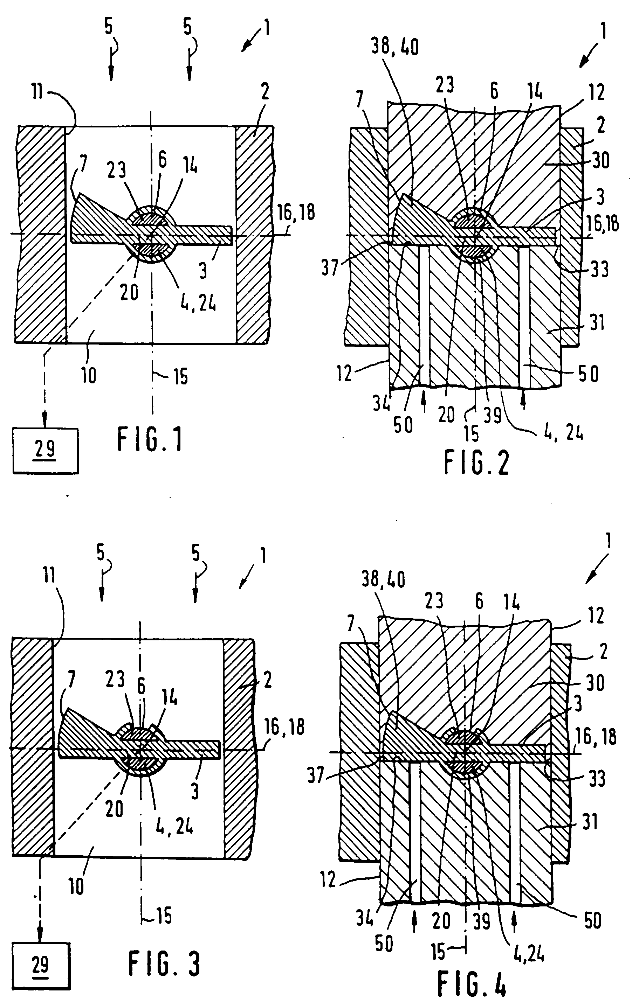

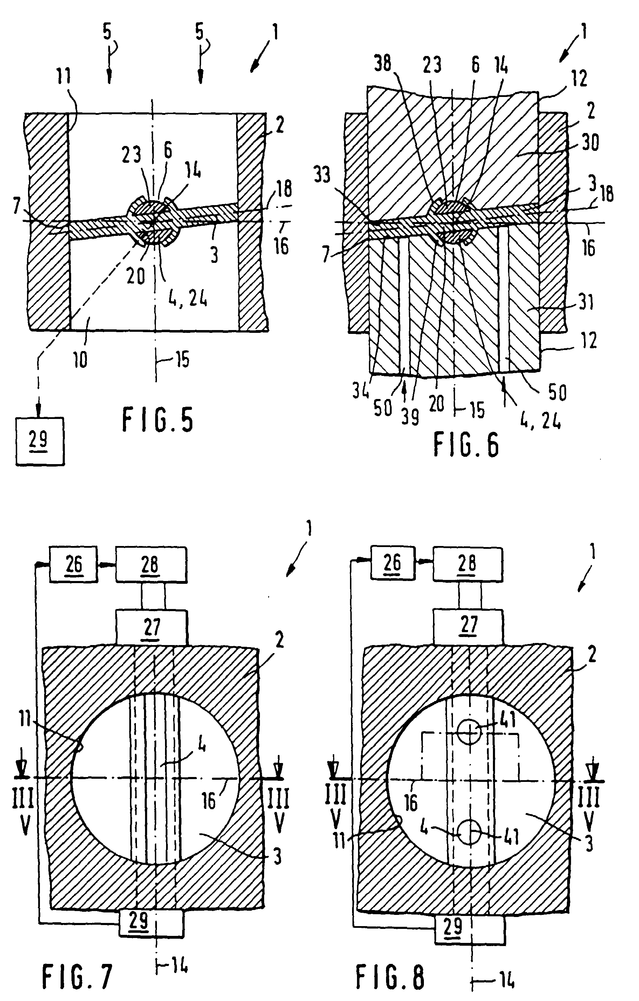

Ausführungsbeispiele der Erfindung sind in der Zeichnung vereinfacht dargestellt und in der nachfolgenden Beschreibung näher erläutert. Es zeigen Figur 1 einen Schnitt einer erfindungsgemäß ausgeführten Drosselvorrichtung eines ersten Ausführungsbeispiels, Figur 2 einen Schnitt der Drosselvorrichtung mit eingebrachten Spritzwerkzeugen zum Herstellen der Drosselvorrichtung nach der Figur 1, Figur 3 einen Schnitt der Drosselvorrichtung nach einem zweiten Ausführungsbeispiel entlang der Linie III-III in Figur 7 oder entlang der Linie III-III in Figur 8, Figur 4 einen Schnitt der Drosselvorrichtung mit eingebrachten Spritzwerkzeugen zum Herstellen der Drosselvorrichtung nach der Figur 3, Figur 5 einen Schnitt der Drosselvorrichtung eines dritten Ausführungsbeispiels entlang der Linie V-V in Figur 7 oder entlang der Linie V-V in Figur 8, Figur 6 einen Schnitt der Drosselvorrichtung mit eingebrachten Spritzwerkzeugen zum Herstellen der Drosselvorrichtung nach der Figur 5, Figur 7 eine Draufsicht auf eine Drosselvorrichtung nach Figur 3 oder Figur 5, Figur 8 eine Draufsicht einer Drosselvorrichtung nach Figur 3 oder Figur 5.

### Beschreibung der Ausführungsbeispiele

Die Figur 1 zeigt in Teilansicht einen Schnitt einer erfindungsgemäß ausgeführten Drosselvorrichtung 1, die zum Beispiel zur Steuerung der Leistung einer gemischverdichtenden, fremdgezündeten oder luftverdichtenden, selbstzündenden Brennkraftmaschine dient. Die Drosselvorrichtung 1 hat einen Drosselklappenstutzen 2, in welchem in einem Ansaugkanal 10 ein Drosselorgan, beispielsweise eine Drosselklappe 3, drehbar eingebracht ist. Der Ansaugkanal 10 weist zum Beispiel eine zylindrische Ansaugwandung 11 auf, die im Schnitt der Figuren 1 bis 6 parallel zu einer mittig durch den Ansaugkanal 10 hindurchgehenden Längsachse 15 geradlinig verläuft. Die Drosselklappe 3 ist mit einer Stellwelle 4 drehfest verbunden und steuert mehr oder weniger die über ein Ansaugrohr in den Drosselklappenstutzen 2 einströmende Luftmenge, beziehungsweise ein einströmendes Brennstoff-Luft-Gemisch. Stromabwärts der Drosselklappe 3 ist der Drosselklappenstutzen 2 beispielsweise mit einer Anschlußleitung mit wenigstens einem Brennraum der Brennkraftmaschine verbunden. Die Strömungsrichtung ist durch entsprechende Pfeile 5 in den Figuren 1, 3 und 5 gekennzeichnet. Die Stellwelle 4 verläuft zentrisch zu einer in den Figuren 1 bis 6 in die Zeichenebene der Figuren 1 bis 6 hineinzeigenden Drehachse 14 quer durch den Drosselklappenstutzen 2 hindurch. Dabei durchdringt die Stellwelle 4 auf zwei Seiten die Ansaugwandung 11 des Ansaugkanals 10 und ist zum Beispiel in zwei hülsenförmigen Aufnahmeverbreiterungen des Drosselklappenstutzens 2 mittels Lagern, beispielsweise Nadellagern, drehbar gelagert. Die Stellwelle 4 ragt mit ihren beiden Stellwellenenden aus dem Drosselklappenstutzen 2 heraus und besitzt am Stellwellenende zum Beispiel eine in den Figuren 7 und 8 schematisch dargestellte Seilscheibe 27, die mittels eines Bowdenzugs mit einem Gaspedal verbunden ist, so daß beim Betätigen des Gaspedals die Drosselklappe 3 verdreht wird. Zur elektronischen Motorleistungssteuerung ist am Stellwellenende der Seilscheibe 27 ein in den Figuren 7 und 8 schematisch dargestellter Drosselklappenanstellmotor 28 angebracht, der in bestimmten Betriebsbereichen der Brennkraftmaschine, beispielsweise zur Leerlaufsteuerung oder zur Schubabschaltung oder beim sogenannten E-Gas, der elektromotorischen Verstellung der Drosselklappe 3, von einem nicht näher dargestellten, elektronischen Steuergerät 26 aktiviert wird und die Drosselklappe 3 verdreht, wobei zur Kontrolle der Verdrehstellung der Drosselklappe 3 an einem gegenüberliegend der Seilscheibe 27 zweiten Stellwellenende ein Drehwinkelgeber 29 angebracht ist. Der Drehwinkelgeber 29 ist in den Figuren 1, 3, 5, 7 und 8 schematisch dargestellt und zum Beispiel in Form eines Präzisionspotentiometers ausgebildet. Der Drehwinkelgeber 29 nimmt entsprechend der jeweiligen Verdrehstellung der Drosselklappe 3 einen bestimmten Widerstandswert an und stellt ein bestimmtes Spannungssignal zur Verfügung, das dem elektronischen Steuergerät 26 zugeführt unter anderem zur Ansteuerung des Drosselklappenanstellmotors 28 dient.

Zur drehfesten Halterung der Drosselklappe 3 ist eine längliche Ausnehmung in Form eines Schlitzes 20 aus der Stellwelle 4 ausgenommen. Der Schlitz 20 erstreckt sich innerhalb des im Ansaugkanal 10 liegenden Teilstücks der Stellwelle 4 entlang der Drehachse 14 und hat eine Erstreckung, die etwa den Maßen der Drosselklappe 3, beziehungsweise einem Außendurchmesser der Drosselklappe 3 entspricht. Der Schlitz 20 unterteilt die Stellwelle 4 in etwa zwei gleich große, halbkreiszylinderförmige Teilhälften 23, 24, die mit axialem Abstand zu einer Schnittebene 18 liegen, welche von der Drehachse 14 und einer quer zur Drehachse 14 und zur Längsachse 15 orientierten Horizontalachse 16 aufgespannt wird. Der Schlitz 20, beziehungsweise die Schnittebene 18 kann, wie in den Figuren 5 und 6 gezeigt ist, gegenüber der Horizontalachse 16 geneigt orientiert sein und verläuft insbesondere durch die Drehachse 14.

Zum Herstellen der Drosselklappe 3 und zur drehfesten Verbindung mit der Stellwelle 4 werden erfindungsgemäß ausgebildete Spritzwerkzeuge 30, 31 beidseitig der Stellwelle 4 in den Ansaugkanal 10 eingeführt. Die Spritzwerkzeuge 30, 31 haben eine dem Ansaugkanal 10 angepaßte, insbesondere zylindrische Form und besitzen einen Querschnitt, der etwas geringer als ein Öffnungsquerschnitt des Ansaugkanals 10 ist, damit die Spritzwerkzeuge 30, 31 mit ihrer Außenfläche 12 anliegend an der Ansaugwandung 11 ohne Verkanten in den Ansaugkanal 10 eingeführt werden können. In den Figuren 2, 4 und 6 ist das Spritzwerkzeug 30 stromaufwärts und das Spritzwerkzeug 31 stromabwärts der Stellwelle 4 dargestellt. Wie in der Figur 2 einer Schnittdarstellung mit eingebrachten Spritzwerkzeugen 30, 31 zum Herstellen der Drosselklappe 3 der Figur 1 des ersten Ausführungsbeispiels dargestellt ist, werden die Spritzwerkzeuge 30, 31 in den Ansaugkanal 10 eingeführt, bis diese mit geringem axialen Abstand zu einer äußeren Mantelfläche 6 der Stellwelle 4 orientiert sind, oder, wie in der Figur 4 gezeigt ist, höchstens teilweise an der äußeren Mantelfläche 6 der Stellwelle 4 anliegen. Die Spritzwerkzeuge 30, 31 besitzen an ihren der Drosselklappe 3 zugewandten Stirnflächen 33, 34 Ausnehmungen 38, 39, die sich in axialer Richtung teilweise in das Innere der Spritzwerkzeuge 30, 31 hinein erstrecken, wobei die Ausnehmung 38 aus der Stirnfläche 33 des Spritzwerkzeugs 30 und die Ausnehmung 39 aus der Stirnfläche 34 des Spritzwerkzeugs 31 ausgenommen ist. Beide teilweise aneinanderliegenden oder mit axialem Abstand von der Stellwelle 4 liegenden Spritzwerkzeuge 30, 31 bilden mit ihren Ausnehmungen 38, 39 einen Hohlraum um die Stellwelle 4, der einer äußeren Form der Drosselklappe 3 entspricht. Der Hohlraum wird nach dem Einführen der Spritzwerkzeuge 30, 31 mittels in den Hohlraum reichender Einfülleitungen 50 mit Kunststoff ausgefüllt. Nach dem Erstarren des Kunststoffes bildet dieser die mit der Stellwelle 4 drehfest verbundene Drosselklappe 3, danach werden die Spritzwerkzeuge 30, 31 aus dem Ansaugkanal 10 herausgezogen. Wie in den Schnittdarstellungen der Figuren 2, 4 und 6 dargestellt ist, erstrecken sich beide Einfülleitungen 50 innerhalb des Spritzwerkzeugs 31 in etwa parallel zur Längsachse 15 bis zur Stirnfläche 34 in die Ausnehmung 39, beziehungsweise in den Hohlraum hinein. Es ist auch möglich, jeweils eine Einfülleitung 50 im Spritzwerkzeug 30 und eine Einfülleitung 50 im Spritzwerkzeug 31 oder beide Einfülleitungen 50 im Spritzwerkzeug 30 vorzusehen. Beim Einfüllen des Kunststoffes gelangt dieser auch in den Schlitz 20 der Stellwelle 4 und füllt diesen aus, so daß sich im Inneren der Stellwelle 4 ein Quersteg aus Kunststoff entlang der Drehachse 14 erstreckt, der einstückig mit der Drosselklappe 3 verbunden ist und eine drehfeste Verbindung der Drosselklappe 3 mit der Stellwelle 4 ermöglicht, beziehungsweise eine sichere Drehmomentenübertragung gewährleistet.

Im ersten Ausführungsbeispiel der Figuren 1 und 2 und im zweiten Ausführungsbeispiel der Figuren 3 und 4 besitzt das Spritzwerkzeug 30 einen sich von der Ansaugwandung 11 mit geringer radialer Wandstärke nach innen ersteckenden Ringsteg 37, der die ringförmige Stirnfläche 33 des Spritzwerkzeugs 30 begrenzt, von dem sich die Ausnehmung 38 in axialer Richtung teilweise in das Innere des Spritzwerkzeugs 30 erstreckt und einen Hohlraum bildet, der nach dem Einfüllen von Kunststoff einen der Strömung 5 zugewandten, vorderen Teil der Drosselklappe 3 ergibt. Der in den Figuren 1 bis 4 links der Längsachse 15 dargestellte Hohlraum der Ausnehmung 38 weist zum Beispiel eine Keilform 40 auf, um damit die Drosselcharakteristik der Drosselklappe 3, beispielsweise im Leerlaufbereich der Brennkraftmaschine in vorteilhafter Weise zu beeinflussen. Aber auch andere Formen der Drosselklappe 3 sind herstellbar, wozu die Ausnehmungen 38, 39 der Spritzwerkzeuge 30, 31 entsprechend einer gewünschten, äußeren Form der Drosselklappe 3 auszubilden sind.

Im Bereich der äußeren Mantelfläche 6 der Stellwelle 4 sind die Ausnehmungen 38, 39 rinnenförmig ausgebildet, so daß zum Beispiel die in der Figur 2 oben dargestellte Ausnehmung 38 des Spritzwerkzeugs 30 in radialer Richtung die obere Teilhälfte 23 der Stellwelle 4 mit axialem Abstand zur äußeren Mantelfläche 6 vollständig umschließt, damit sich nach dem Einfüllen von Kunststoff in die Ausnehmung 38 entlang der Drehachse 14 eine halbschalenförmige Außenhülle aus Kunststoff ergibt, die die obere Teilhälfte 23 der Stellwelle 4 vollständig mit Kunststoff bedeckt. Es ist auch möglich, wie im zweiten Ausführungsbeispiel der Figur 4 mit eingebrachten Spritzwerkzeugen 30, 31 zum Herstellen der Drosselklappe 3 der Figur 3 gezeigt ist, die Ausnehmung 38 im Bereich der Längsachse 15 höchstens teilweise ohne axialen Abstand zur äußeren Mantelfläche 6 auszubilden, so daß die in Figur 3 oben dargestellte Teilhälfte 23 der Stellwelle 4 nur teilweise mit einer Außenhülle aus Kunststoff bedeckt ist. Wie in der Figur 7 einer Draufsicht der Figur 4, dargestellt ist, ist die Stellwelle 4 entlang der Drehachse 14 teilweise kunststofffrei, da das Spritzwerkzeug 30 beim Einführen in den Ansaugkanal 10 teilweise an der äußeren Mantelfläche 6 mit einem sich entlang der Drehachse 14 erstreckenden Steg anliegt. Es ist auch möglich, wie in der Figur 8, einer Draufsicht der Figur 4, dargestellt ist, die Ausnehmung 38 des Spritzwerkzeugs 30 derart auszubilden, daß das Spritzwerkzeug 30 nur partiell, beispielsweise an zwei kreisförmigen Begrenzungen 41 der Ausnehmung 38 an der äußeren Mantelfläche 6 der Stellwelle 4 anliegt, so daß die äußere Mantelfläche 6 des oberen Teilstücks 23 nach dem Einfüllen von Kunststoff außer an den Begrenzungen 41 nahezu vollständig von einer halbschalenförmigen Außenhülle aus Kunststoff bedeckt wird. Wie in der Figur 8 dargestellt ist, sind beide kreisförmigen Begrenzungen 41 beispielsweise symmetrisch zur Horizontalachse 16 angeordnet, um eine exakte Positionierung beider Spritzwerkzeuge 30, 31 zu gewährleisten. Es ist auch möglich, eine einzelne kreisförmige Begrenzung 41, zum Beispiel in der Mitte des Ansaugkanals 10 im Schnittpunkt von Horizontalachse 16 und Drehachse 14 vorzusehen. Das Spritzwerkzeug 31 der Figuren 2 und 4 besitzt eine parallel zur Horizontalachse 16 verlaufende, eben ausgebildete Stirnfläche 34, aus welcher die Ausnehmung 39 rinnenförmig ausgenommen ist, so daß die untere Teilhälfte 24 der Stellwelle 4 in radialer Richtung mit axialem Abstand zur äußeren Mantelfläche 6 vollständig umschlossen wird und sich entlang der Drehachse 14 eine halbschalenförmige Außenhülle aus Kunststoff ergibt, die die untere Teilhälfte 24 der Stellwelle 4 vollständig mit Kunststoff bedeckt. Es ist auch möglich, die Ausnehmung 39 der Figuren 2 und 4 entsprechend der Ausnehmung 38 der Figur 4 auszubilden, damit das Spritzwerkzeug 31 teilweise ohne axialen Abstand zur äußeren Mantelfläche 6 an der äußeren Mantelfläche 6 der unteren Teilhälfte 24 der Stellwelle 4 teilweise anstoßen kann. Es ist auch möglich, die Ausnehmungen 38, 39 des zweiten Ausführungsbeispiels der Figur 4 derart auszubilden, daß das Spritzwerkzeug 30 und das Spritzwerkzeug 31 jeweils mit den in der Figur 8 dargestellten, kreisförmigen Begrenzungen 41 partiell anliegt, so daß die äußere Mantelfläche 6 der Stellwelle 4 nach dem Einfüllen von Kunststoff außer den Begrenzungen 41 nahezu vollständig mit einer Außenhülle aus Kunststoff bedeckt wird.

Die Figuren 5, 6 zeigen ein drittes Ausführungsbeispiel der erfindungsgemäßen Drosselvorrichtung 1, wobei alle gleichen oder gleichwirkenden Teile mit den gleichen Bezugszeichen der Figuren 1 bis 4 gekennzeichnet sind. Im Gegensatz zum ersten und zweiten Ausführungsbeispiel berühren sich beim dritten Ausführungsbeispiel beide Spritzwerkzeuge 30, 31 nicht an ihren Stirnflächen 33, 34, sondern liegen mit axialem Abstand entfernt voneinander. Dabei kann wenigstens eine der Stirnflächen 33, 34 wenigstens teilweise an der äußeren Mantelfläche 6 der Stellwelle 4 anliegen. Wie in der Figur 7 einer Draufsicht der Figur 5 dargestellt ist, sind die Ausnehmungen 38, 39 rinnenförmig ausgebildet und erstrecken sich entsprechend der Ausnehmung 38 in Figur 4 entlang der Drehachse 14, so daß beide Teilhälften 23, 24 der Stellwelle 4 mit Kunststoff bedeckt werden und dort kunststofffrei sind, wo die Spritzwerkzeuge 30, 31 an der äußeren Mantelfläche 6 anliegen. Beim Einführen der Spritzwerkzeuge 30, 31 in den Ansaugkanal 10 stoßen diese an äußeren Mantelfläche 6 der Stellwelle 4 an, so daß eine exakte Positionierung beider Spritzwerkzeuge 30, 31 erfolgt. Es ist auch möglich, wie in der Figur 8, einer Draufsicht der Figur 5, dargestellt ist, die Ausnehmungen 38, 39 derart auszubilden, daß das Spritzwerkzeug 30, beziehungsweise das Spritzwerkzeug 31 nur teilweise, beispielsweise innerhalb zweier kreisförmigen Begrenzungen 41 an der äußeren Mantelfläche 6 der Stellwelle 4 anliegt, so daß die äußere Mantelfläche 6 des oberen Teilstücks 23 und des unteren Teilstücks 24 der Stellwelle 4 außer im Bereich der Begrenzungen 41 nahezu vollständig mit einer Außenhülle aus Kunststoff bedeckt wird. Der von den Stirnflächen 33, 34 der Spritzwerkzeuge 30, 31 und der Ansaugwandung 11 eingeschlossene Hohlraum wird zur Bildung der Drosselklappe 3 anschließend mit Kunststoff ausgefüllt, so daß im Gegensatz zum ersten und zweiten Ausführungsbeispiel Kunststoff an die Ansaugwandung 11 des Ansaugkanals 10 gelangt, wobei sich abhängig von der Wahl des Kunststoffes nach dem Erstarren und Zusammenschrumpfen ein äußerst geringer, radialer Spalt zwischen einer äußeren Mantelfläche 7 der Drosselklappe 3 und der Ansaugwandung 11 einstellt. Dadurch ergibt sich insbesondere in Leerlaufstellung der Drosselklappe 3 die Möglichkeit der Steuerung eines äußerst geringen Luftmassenstroms. Die Spritzwerkzeuge 30, 31 der Figuren 5 und 6 besitzen bis auf die Ausnehmungen 38, 39 eben ausgebildete Stirnflächen 33, 34, die beispielsweise gegenüber der Horizontalachse 16 geneigt orientiert und vorzugsweise parallel zueinander verlaufend sind, so daß sich nach dem Einfüllen des Kunststoffes in den Hohlraum zwischen den Stirnflächen 33, 34 eine entsprechend geneigte, scheibenförmige Dosselklappe 3 ergibt. Der Neigungswinkel der Drosselklappe 3 beeinflußt die Drosseleigenschaften insbesondere im Bereich des Leerlaufs der Brennkraftmaschine.

Durch die Ausgestaltung der Stirnflächen 33, 34 der Spritzwerkzeuge 30, 31, beziehungsweise der Ausnehmungen 38, 39 können in einfacher Art und Weise nahezu beliebig geformte Drosselklappen 3 mit geringen Toleranzen hergestellt und mit der Stellwelle 4 drehfest verbunden werden. Vorteilhafterweise erfolgt das Herstellen der Drosselklappe 3 in nahezu fertigmontiertem Zustand der Drosselvorrichtung 1, bei der der Drehwinkelgeber 29 nur lose, beziehungsweise verdrehbar an einem Stellwellenende der Stellwelle 4 angebracht ist. Zum Toleranzabgleich, beziehungsweise zum Einstellen des Drehwinkelgebers 29 wird dieser solange verdreht, bis sich ein gewünschter Widerstandswert, beziehungsweise ein bestimmtes Spannungsverhältnis am Drehwinkelgeber 28 eingestellt, wonach der Drehwinkelgeber bei unveränderter Verdrehlage der Stellwelle 4 fertigmontiert, beziehungsweise drehfest mit der Drosselvorrichtung 1 verbunden wird. Anschließend werden die Spritzwerkzeuge 30, 31 in den Ansaugkanal 10 eingeführt, bis diese zum Beispiel an der äußeren Mantelfläche 6 der Stellwelle 4 anstoßen, wonach von außen in die Einfülleitungen 50 beispielsweise des Spritzwerkzeugs 31 Kunststoff eingefüllt wird. Nach geraumer Zeit nach dem Erstarren des Kunststoffes können die Spritzwerkzeuge 30, 31 aus dem Ansaugkanal 10 herausgezogen werden, und man erhält die fertige Drosselklappe 3, beziehungsweise die fertige Drosselvorrichtung 1. Die Ausgestaltung der Ausnehmungen 38, 39 stellt sicher, daß die Drosselklappe 3 stets mit gleichbleibend präziser Form und mit gleichbleibend präziser Verdrehlage im Ansaugkanal 10 hergestellt werden kann, wobei durch die präzise Lage der Drosselklappe 3 auch der an der Drosselklappe 3 vorbeiströmende Luftmassenstrom bekannt ist und dem zuvor eingestellten Spannungsverhältnis am Drehwinkelgeber 29 entspricht. Damit ist eine eindeutige Zuordnung von Luftmassenstrom und vom Drehwinkelgeber 29 bereitgestellten Spannungsverhältnis gegeben, so daß auf ein bisher übliches Nachmessen des Luftmassenstroms in einer Meßvorrichtung verzichtet werden kann.

## Patentansprüche

1. Drosselvorrichtung (1) für eine Brennkraftmaschine mit einem Drosselklappenstutzen (2), der einen Ansaugkanal (10) aufweist, durch den eine im Drosselklappenstutzen (2) drehbar gelagerte Stellwelle (4) ragt, die mit einem einen Ansaugkanal (10) steuernden Drosselorgan (3) verbunden ist, das als scheibenförmiges Kunststoffteil ausgebildet und durch Spritzgießen hergestellt ist, wobei der Kunststoff wenigstens teilweise eine äußere Mantelfläche (6) der Stellwelle (4) umschließt, dadurch gekennzeichnet, daß die Stellwelle (4) entlang ihrer Drehachse einen Schlitz (20) hat, der mit Kunststoff ausgefüllt ist.

2. Drosselvorrichtung nach Anspruch 1, dadurch gekennzeichnet, daß das Drosselorgan (3) an einer der Strömung (5) entgegengerichteten Vorderseite des Drosselorgans (3) eine Keilform (40) aufweist.

3. Drosselvorrichtung nach Anspruch 1, dadurch gekennzeichnet, daß das Drosselorgan (3) geneigt zu einer Horizontalachse (16) im Ansaugkanal (10) angeordnet ist.

4. Verfahren zum Herstellen einer Drosselvorrichtung für eine Brennkraftmaschine mit einem Drosselklappenstutzen (2), der einen Ansaugkanal (10) aufweist, durch den eine im Drosselklappenstutzen (2) drehbar gelagerte Stellwelle (4) ragt, die mit einem einen Ansaugkanal (10) steuernden Drosselorgan (3) verbunden ist, das als scheibenförmiges Kunststoffteil ausgebildet und durch Spritzgießen hergestellt ist, wobei zunächst beidseitig stromaufwärts und stromabwärts der Stellwelle (4) je ein Spritzwerkzeug (30, 31) in den Ansaugkanal (10) eingeführt wird, wobei ein Hohlraum verbleibt, und danach der Hohlraum mittels in den Hohlraum reichender Einfülleitungen (50) mit Kunststoff ausgefüllt wird und anschließend nach dem Erstarren des Kunststoffes die Spritzwerkzeuge (30, 31) aus dem Ansaugkanal (10) entfernt werden, dadurch gekennzeichnet, daß beide Spritzwerkzeuge (30, 31) mittels aus ihren einander zugewandten Stirnflächen (33, 34) ausgenommener Ausnehmungen (38, 39) den Hohlraum um die Stellwelle (4) in Form eines Drosselorgans (3) im Ansaugkanal (10) bilden und daß wenigstens eines der Spritzwerkzeuge (30, 31) so weit in den Ansaugkanal (10) eingeführt wird, daß es höchstens teilweise an einer äußeren Mantelfläche (6) der Stellwelle (4) anstößt, die einen Schlitz (20) entlang ihrer Drehachse hat, der vom Kunststoff ausgefüllt wird.

5. Verfahren zum Herstellen einer Drosselvorrichtung für eine Brennkraftmaschine mit einem Drosselklappenstutzen (2), der einen Ansaugkanal (10) aufweist, durch den eine im Drosselklappenstutzen (2) drehbar gelagerte Stellwelle (4) ragt, die mit einem einen Ansaugkanal (10) steuernden Drosselorgan (3) verbunden ist, das als scheibenförmiges Kunststoffteil ausgebildet und durch Spritzgießen hergestellt ist, wobei zunächst beidseitig stromaufwärts und stromabwärts der Stellwelle (4) je ein Spritzwerkzeug (30, 31) in den Ansaugkanal (10) eingeführt wird, wobei ein Hohlraum verbleibt, und danach der Hohlraum mittels in den Hohlraum reichender Einfülleitungen (50) mit Kunststoff ausgefüllt wird und anschließend nach dem Erstarren des Kunststoffes die Spritzwerkzeuge (30, 31) aus dem Ansaugkanal (10) entfernt werden, dadurch gekennzeichnet, daß beide Spritzwerkzeuge (30, 31) mittels aus ihren einander zugewandten Stirnflächen (33, 34) ausgenommener Ausnehmungen (38, 39) den Hohlraum um die Stellwelle (4) in Form eines Drosselorgans (3) im Ansaugkanal (10) bilden und daß beide Spritzwerkzeuge (30, 31) so weit in den Ansaugkanal (10) eingeführt werden, bis sie an ihren Stirnflächen (33, 34) teilweise aneinander anliegen, wobei die Stellwelle (4) einen Schlitz (20) entlang ihrer Drehachse hat, der vom Kunststoff ausgefüllt wird, so daß der Kunststoff eine äußere Mantelfläche (6) der Stellwelle (4) völlig umschließt.

6. Verfahren nach Anspruch 4, dadurch gekennzeichnet, daß beide Spritzwerkzeuge (30, 31) so weit in den Ansaugkanal (10) eingeführt werden, bis sie an ihren Stirnflächen (33, 34) teilweise aneinander anliegen.

7. Verfahren nach Anspruch 4, dadurch gekennzeichnet, daß wenigstens ein Spritzwerkzeug (30, 31) mit einer etwa kreisförmigen Begrenzung (41) an der äußeren Mantelfläche (6) der Stellwelle (4) anliegt.

8. Verfahren nach Anspruch 4 oder 5, dadurch gekennzeichnet, daß das Einführen der Spritzwerkzeuge (30, 31) erst nach dem Einstellen einer bestimmten Verdrehlage der Stellwelle (4) und dem Einstellen eines mit der Stellwelle (4) verbundenen Drehwinkelgebers (29) erfolgt.

## Claims

1. Throttle appliance (1) for an internal combustion engine, having a throttle butterfly connecting sleeve (2) which has an induction passage (10) through which protrudes a setting shaft (4) rotatably supported in the throttle butterfly connecting sleeve (2), which setting shaft is connected to a throttle element (3) which controls an induction passage (10), is configured as a plastic part in the form of a disc and is manufactured by injection moulding, the plastic at least partially enclosing an outer generated surface (6) of the setting shaft (4), characterized in that the setting shaft (4) has a slot (20) along its axis of rotation, which slot is filled with plastic.

2. Throttle appliance according to Claim 1, characterized in that the throttle element (3) has a wedge shape (40) on a front surface of the throttle element (3) directed against the flow (5).

3. Throttle appliance, according to Claim 1, characterized in that the throttle element (3) is arranged at an inclination to a horizontal axis (16) in the induction passage (10).

4. Method of manufacturing a throttle appliance for an internal combustion engine, having a throttle butterfly connecting sleeve (2) which has an induction passage (10) through which protrudes a setting shaft (4) rotatably supported in the throttle butterfly connecting sleeve (2), which setting shaft is connected to a throttle element (3) which controls an induction passage (10), is configured as a plastic part in the form of a disc and is manufactured by injection moulding, injection tools (30 and 31) being respectively first introduced into the induction passage (10) on both sides upstream and downstream of the setting shaft (4), a hollow space remaining, and the hollow space then being filled with plastic by means of filling conduits (50) extending into the hollow space and the injection tools (30 and 31) are subsequently removed from the induction passage (10) after the solidification of the plastic, characterized in that the two injection tools (30, 31) form the hollow space in the induction passage (10) around the setting shaft (4) in the shape of a throttle element (3) by means of recesses (38, 39) recessed in their end surfaces (33, 34) facing towards one another, and in that at least one of the injection tools (30, 31) is introduced into the induction passage (10) to such an extent that it at most partially touches an outer generated surface (6) of the setting shaft (4) which has a slot (20) along its axis of rotation, which slot is filled with plastic.

5. Method of manufacturing a throttle appliance for an internal combustion engine, having a throttle butterfly connecting sleeve (2) which has an induction passage (10) through which protrudes a setting shaft (4) rotatably supported in the throttle butterfly connecting sleeve (2), which setting shaft is connected to a throttle element (3) which controls an induction passage (10), is configured as a plastic part in the form of a disc and is manufactured by injection moulding, injection tools (30 and 31) being respectively first introduced into the induction passage (10) on both sides upstream and downstream of the setting shaft (4), a hollow space remaining, and the hollow space then being filled with plastic by means of filling conduits (50) extending into the hollow space and the injection tools (30 and 31) are subsequently removed from the induction passage (10) after the solidification of the plastic, characterized in that the two injection tools (30, 31) form the hollow space in the induction passage (10) around the setting shaft (4) in the shape of a throttle element (3) by means of recesses (38, 39) recessed in their end surfaces (33, 34) facing towards one another, and in that the two injection tools (30, 31) are introduced into the induction passage (10) to such an extent that the end surfaces (33, 34) thereof are partially in contact with one another, the setting shaft (4) having a slot (20) along its axis of rotation, which slot is filled with plastic, with the result that the plastic completely encloses an outer generated surface (6) of the setting shaft (4).

6. Method according to Claim 4, characterized in that the two injection tools (30, 31) are introduced into the induction passage (10) to such an extent that the end surfaces (33 and 34) thereof are partially in contact with one another.

7. Method according to Claim 4, characterized in that at least one injection tool (30, 31) is in contact with the outer generated surface (6) of the setting shaft (4) by means of an approximately circular boundary (41).

8. Method according to Claim 4 or 5, characterized in that the introduction of the injection tools (30 and 31) only takes place after the setting of a certain rotational position of the setting shaft (4) and after the setting of a rotational angle sensor (29) connected to the setting shaft (4).

## Revendications

1. Dispositif d'étranglement (1) pour moteur à combustion interne, avec un ajutage (2) contenant un clapet d'étranglement, ajutage qui présente un canal d'aspiration (10) à travers lequel passe un axe de réglage (4) monté de façon à pouvoir tourner dans l'ajutage (2) qui contient le clapet d'étranglement, axe de réglage qui est relié à un organe d'étranglement (3) qui commande le canal d'aspiration (10), organe d'étranglement (3) qui est constitué par une pièce en matière plastique ayant la forme d'un disque et qui est fabriqué par moulage par injection, la matière plastique entourant au moins en partie une surface enveloppe extérieure (6) de l'axe de réglage (4),
caractérisé en ce que
l'axe de réglage (4) a une fente (20) le long de son axe de rotation, fente qui est remplie de matière plastique.

2. Dispositif d'étranglement selon la revendication 1,
caractérisé en ce que
l'organe d'étranglement (3) présente une forme en coin (40) sur une face antérieure de cet organe d'étranglement (3), orientée dans le sens opposé à l'écoulement (5).

3. Dispositif d'étranglement selon la revendication 1,
caractérisé en ce que
l'organe d'étranglement (3) est incliné par rapport à un axe horizontal (16) dans le canal d'aspiration (10).

4. Procédé de fabrication d'un dispositif d'étranglement pour moteur à combustion interne, avec un ajutage (2) contenant un clapet d'étranglement, ajutage qui présente un canal d'aspiration (10) à travers lequel passe un axe de réglage (4) monté de façon à pouvoir tourner dans l'ajutage (2) qui contient le clapet d'étranglement, axe de réglage qui est relié à un organe d'étranglement (3) qui commande un canal d'aspiration (10), organe d'étranglement (3) qui est constitué par une pièce en matière plastique ayant la forme d'un disque et qui est fabriqué par moulage par injection, un outil d'injection (30, 31) étant tout d'abord introduit dans le canal d'aspiration (10) des deux côtés amont et aval de l'axe de réglage (4), en laissant subsister une cavité, la cavité étant ensuite remplie de matière plastique au moyen de conduites de remplissage (50) pénétrant dans la cavité, puis les outils d'injection étant enlevés du canal d'aspiration (10) après le figeage de la matière plastique,
caractérisé en ce que
- les deux outils d'injection (30, 31) forment dans le canal d'aspiration (10), au moyen d'évidements (38, 39) tirés de leurs faces frontales (33, 34) tournées l'une vers l'autre, la cavité située autour de l'axe de réglage (4), cette cavité ayant la forme d'un organe d'étranglement (3), et
- au moins l'un des outils d'injection (30, 31) est introduit dans le canal d'aspiration (10) jusqu'à ce qu'il vienne en contact, au plus en partie, avec une surface enveloppe extérieure (6) de l'axe de réglage (4) ayant une fente (20) le long de son axe de rotation, fente qui est remplie de matière plastique.

5. Procédé de fabrication d'un dispositif d'étranglement pour moteur à combustion interne avec un ajutage (2) contenant un clapet d'étranglement, ajutage qui présente un canal d'aspiration (10) à travers lequel passe un axe de réglage (4) monté de façon à pouvoir tourner dans l'ajutage (2) qui contient le clapet d'étranglement, axe de réglage qui est relié à un organe d'étranglement (3) qui commande un canal d'aspiration (10), organe d'étranglement (3) qui est constitué par une pièce en matière plastique ayant la forme d'un disque et qui est fabriqué par moulage par injection, un outil d'injection (30, 31) étant tout d'abord introduit dans le canal d'aspiration (10) des deux côtés amont et aval de l'axe de réglage (4), en laissant subsister une cavité, la cavité étant ensuite remplie de matière plastique au moyen de conduites de remplissage (50) pénétrant dans la cavité, puis les outils d'injection (30, 31) étant enlevés du canal d'aspiration (10) après le figeage de la matière plastique.
caractérisé en ce que
- les deux outils d'injection (30, 31) forment dans le canal d'aspiration (10), au moyen d'évidements (38, 39) tirés de leurs faces frontales (33, 34) tournées l'une vers l'autre, la cavité située autour de l'axe de réglage (4) et ayant la forme d'un organe d'étranglement (3), et
- les deux outils d'injection (30, 31) sont introduits dans le canal d'aspiration (10) jusqu'à ce qu'ils reposent en partie l'un sur l'autre par leurs faces frontales (33, 34), l'axe de réglage (4) ayant une fente (20) le long de son axe de rotation, fente qui est remplie de matière plastique, de telle sorte que la matière plastique entoure complètement une surface enveloppe extérieure (6) de l'axe de réglage (4)

6. Procédé selon la revendication 4,
caractérisé en ce que
les deux outils d'injection (30, 31) sont introduits dans le canal d'aspiration (10) jusqu'à ce qu'ils reposent en partie l'un sur l'autre par leurs faces frontales (33, 34).

7. Procédé selon la revendication 4,
caractérisé en ce que
au moins un outil d'injection (30, 31) repose par une délimitation (41) de forme à peu près circulaire, sur la surface enveloppe extérieure (6) de l'axe de réglage (4).

8. Procédé selon la revendication 4 ou 5,
caractérisé en ce que
l'introduction des outils d'injection (30, 31) n'a lieu seulement qu'après le réglage d'une position de rotation déterminée de l'axe de réglage (4), et le réglage d'un capteur d'angle de rotation (29) relié à l'axe de réglage (4).
